Europäisches Patentamt

European Patent Office

Office européen des brevets

(11) Publication number: **0 555 583 A1**

# EUROPEAN PATENT APPLICATION

(21) Application number: **92309262.1**

(22) Date of filing: **12.10.92**

(51) Int. Cl.⁵: **G11B 7/26**

(30) Priority: **10.02.92 JP 24052/92**

(43) Date of publication of application:
**18.08.93 Bulletin 93/33**

(84) Designated Contracting States:
**DE FR GB NL**

(71) Applicant: **PIONEER ELECTRONIC CORPORATION**
**No. 4-1, Meguro 1-chome**
**Meguro-ku Tokyo-to(JP)**

(72) Inventor: **Iida, Tetsuya, c/o Pioneer Electronic Corp.**
**Sougou Kenkyusho, 6-1-1 Fujimi**
**Tsurugashima-shi, Saitama-ken(JP)**
Inventor: **Okumura, Yoichi, c/o Pioneer Electronic Corp.**
**Sougou Kenkyusho, 6-1-1 Fujimi**
**Tsurugashima-shi, Saitama-ken(JP)**
Inventor: **Sasaki, Hironao, c/o Pioneer Electronic Corp.**
**Sougou Kenkyusho, 6-1-1 Fujimi**
**Tsurugashima-shi, Saitama-ken(JP)**
Inventor: **Higuchi, Takanobu, c/o Pioneer Electronic Corp.**
**Sougou Kenkyusho, 6-1-1 Fujimi**
**Tsurugashima-shi, Saitama-ken(JP)**
Inventor: **Ogoshi, Kunizo, c/o Pioneer Electronic Corp.**
**Sougou Kenkyusho, 6-1-1 Fujimi**
**Tsurugashima-shi, Saitama-ken(JP)**
Inventor: **Yokoseki, Shinichi, c/o Pioneer Electronic Corp.**
**Sougou Kenkyusho, 6-1-1 Fujimi**
**Tsurugashima-shi, Saitama-ken(JP)**

(74) Representative: **Jackson, Peter Arthur**
**GILL JENNINGS & EVERY, Broadgate House,**
**7 Eldon Street**
**London EC2M 7LH (GB)**

(54) **Method for manufacturing optical discs.**

(57) The present invention provides a method for manufacturing an optical disc comprising the steps of: forming a resist film onto a glass substrate; forming a barrier coated layer onto the resist film; forming a contrast enhancement lithography (CEL) material layer onto the barrier coated layer; forming a pit pattern by effecting an exposing treatment with the resist film; peeling off the CEL material layer from the barrier coated layer; developing the resist film being exposed to form a resist master board; plating the resist master plate being developed to form a stamper; effecting an injection molding by utilizing the stamper to form a disc; forming a reflection film onto the disc; and forming an overcoated layer onto the reflection film.

## F I G. 1

1 — RESIST FILM FORMING PROCESS

2 — BARRIER COATED LAYER FORMING PROCESS

3 — CEL MATERIAL LAYER FORMING PROCESS

4 — PIT PATTERN FORMING PROCESS

5 — CEL MATERIAL LAYER PEELING PROCESS

6 — DEVELOPING PROCESS

7 — ELECTRO FORMING PROCESS

8 — INJECTION MOLDING PROCESS

9 — REFLECTIVE FILM FORMING PROCESS

10 — OVERCOATED LAYER FORMING PROCESS

11 — FINISHING PROCESS

The present invention relates to a method for manufacturing an optical disc, and more particularly to a method capable of manufacturing, so-called, a high density optical disc having a remarkably increased recording density.

Optical discs such as laser vision discs have so called track structures. In such a track structure, information signals are recorded by forming a train of signal pits spirally from the inner circumference of the optical disc to the outer circumference thereof.

A conventional optical disc for recording various information is generally manufactured in accordance with the following processes.

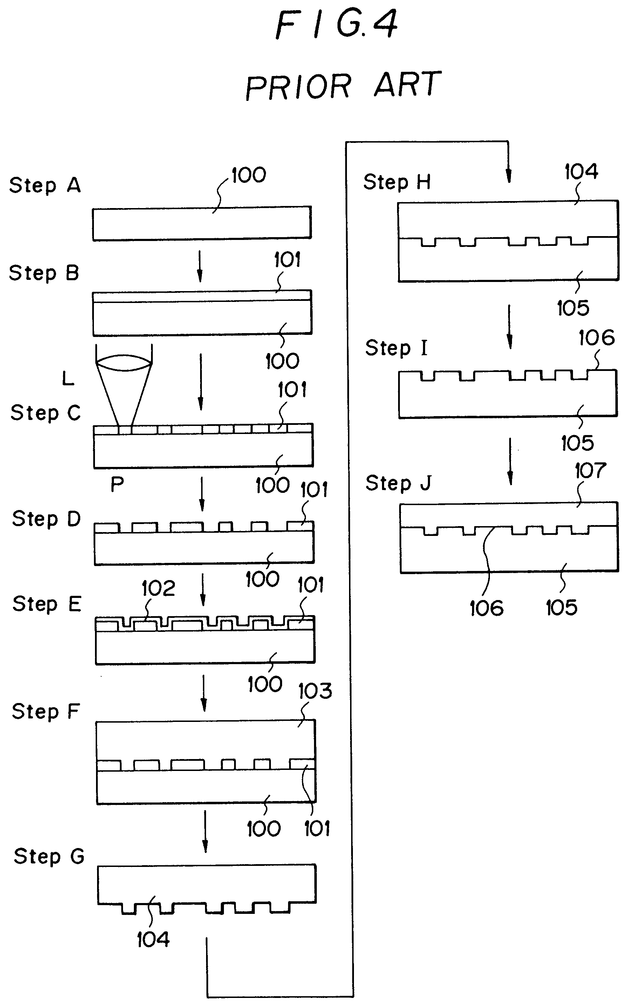

Namely, first of all, as indicated by Step A shown in FIG. 4, a positive-type photoresist is coated onto a surface of a well-polished glass substrate 100 so as to have an uniform thickness, thereby to form a resist film 101 as indicated by Step B shown in FIG. 4 (resist film forming process). Subsequently, as indicated by Step C shown in FIG. 4, a laser beam L is radiated onto thus formed resist film 101 to form pit patterns P in which a plurality of signal pits are formed in a form of a train (pit pattern forming process).

A portion of the resist film 101 radiated by the laser beam L becomes more easily to be dissolved into an alkaline developing solution in comparison with the portion of non radiated. Therefore, when a developing treatment is effected by applying or coating the alkaline developing solution onto the resist film 101, recessed portions corresponding to the signal pits are formed at the portion radiated by the laser beam L as indicated by Step D shown in FIG. 4 (developing process).

Thereafter, as indicated by Step E shown in FIG. 4, a metallized film 102 is formed onto the resist film 101 so as to impart an electrical conductivity. Subsequently, as indicated by Step F shown in FIG. 4, an electroformed body 103 composed of nickel (Ni) or the like is formed on the metallized film 102 by effecting electroforming (electroforming process).

In the next step, the electroformed body 103 together with the metallized film 102 are peeled-off from the resist film 101 and the glass substrate 100 whereby a metal master board (stamper) 104 can be obtained as indicated by Step G shown in FIG. 4. Thereafter, as indicated by Step H shown in FIG. 4, an injection molding is effected by utilizing thus formed metal master board 104 to form a disc 105 composed of resin (injection molding process).

Then, a reflective film 106 is formed onto the disc 105 as indicated by Step I shown in FIG. 4 (reflective film forming process). In addition, an overcoated layer 107 for protecting the reflective film 106 is formed as indicated by Step J shown in FIG. 4 (overcoated layer forming process). Finally, various finishing works such as applicating a label onto the disc 105 or the like is effected as desired (finishing process), whereby such an optical disc as a final product is conventionally manufactured.

By the way, in recent years, it has been eagerly required to increase the recording density of the optical disc. To meet the requirement, several attempts have been made such that a length of the respective signal pit to be formed in the optical disc as a recorded information is lowered, or a pitch of the adjacent tracks arranged in a form of spiral is decreased. Each of the tracks has a plurality of signal pits formed therein in a form of a train.

With respect to the recording density of the optical disc, the recording density depends on a recordable minimum spot size R of the laser beam L. On the other hand, the recordable minimum spot size R is determined or restricted by a specification of an exposing device and a capability of a resist process. It has been generally known that the recordable minimum spot size R is defined by the following equation:

$$R = k \cdot ( \lambda / NA )$$

where in the equation described above, k is a constant value determined by the resist process, $\lambda$ represents a wave length of the exposing light beam, and NA represents a numerical aperture of an optical system, respectively.

As is clear from the above equation, it may be confirmed that it becomes possible to increase the recording density of the optical disc by employing a resist process enabling to decrease the constant value of k, or by utilizing a light source emitting an exposing light having a short wave length, or by employing an optical system having a high numerical aperture (NA).

However, even if a photoresist having a high resolution is used, a lower limit of the wave length of the laser beam may be about 350 nm within a range of the wave lengths of the laser beam that enabling to be continuously emitted from the light source, and the numerical aperture (NA) of the optical system in these days has almost reached an upper limit of about 0.9. Therefore, it has almost reached to an attainable limit of increasing the recording density of the optical disc as far as the conventional manufacturing method is utilized.

To put it concretely, even in the conventional manufacturing method wherein an exposing light having a wave length λ of 350 nm, an exposing device having a numerical aperture NA of 0.9, and a resist optimized with respect to the optical disc process are utilized, the existing state of the recording density of the optical disc is as follows. Namely, an attainable master board is still remained or limited to that one having a pit length of 0.3 $\mu$m and a track pitch of about 0.8 $\mu$m. The recording density of the master board is still remained upper most about four-times larger than that of laser discs in current use.

An object of the present invention is to substantially eliminate the defects or drawbacks encountered in the prior art described above and to provide a method for manufacturing an optical disc capable of manufacturing, so called, a high density optical disc having a high recording density with a high production efficiency even in a case where the conventional exposing device or photoresist or the like are utilized in the manufacturing process.

To achieve the above object, according to the present invention, there is provided a method for manufacturing an optical disc comprising: a resist film forming process for forming a resist film onto a glass substrate; a barrier coat layer forming process for forming a barrier coat layer onto the resist film; a CEL material layer forming process for forming a contrast enhancement lithography (CEL) material layer onto the barrier coat layer; a pit pattern forming process for forming a pit pattern by effecting an exposing treatment with the resist film; a CEL material layer peeling process for peeling off the CEL material layer from the barrier coat layer; a developing process for developing the resist film being exposed to form a resist master board; an electroforming process for plating the resist master board to form a stamper; an injection molding process for effecting the injection molding by utilizing the stamper to form a disc; a reflection film forming process for forming the reflection film onto the disc; and an overcoat layer forming process for forming the overcoat layer onto the reflection film.

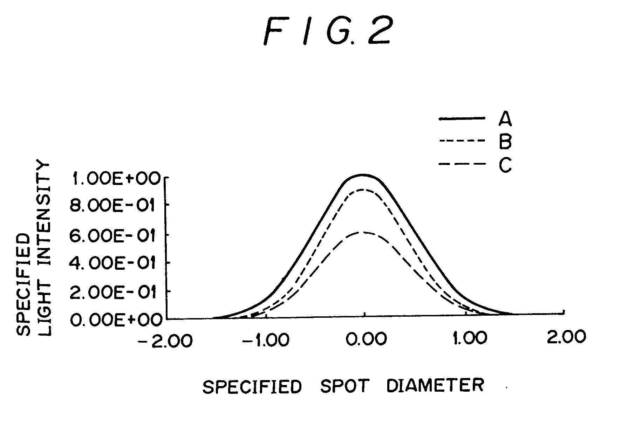

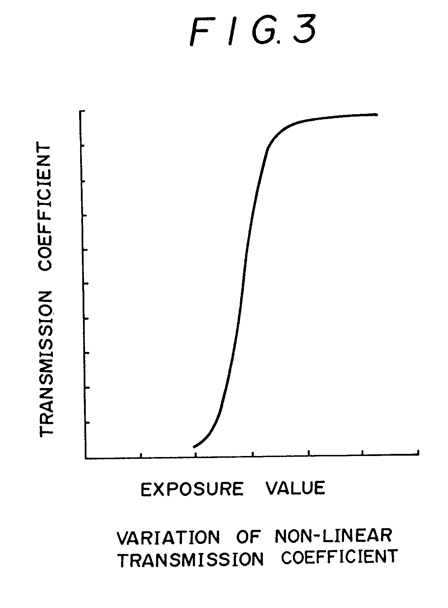

A distribution of light intensity within the laser beam spot to be radiated to the resist film at a focal point within the resist film is generally indicated by a curve A shown in FIG. 2. In this regard, when an optical filter to non-linearly vary the intensity of a transmitted light with respect to that of an incident light is provided on an optical path, the distribution of light intensity within the laser beam spot to be radiated to the resist film at a focal point within the resist film will have a distribution curve of B or C shown in FIG. 3. The distribution curve B represents a light intensity distribution of the laser beam transmitted through a CEL material layer composed of a CEL material 1. On the other hand, the distribution curve C represents a light intensity distribution of the laser beam transmitted through a CEL material layer composed of a CEL material 2.

Accordingly, although absolute intensities of the distributions indicated by the curve B or C are relatively lowered in comparison with that of the curve A shown in FIG. 2, it is possible to reduce a width of mesial magnitude of the distribution. As the result, it becomes possible to effectively reduce a diameter of the laser beam spot to be used for recording information, thus enabling to increase a recording density of the information.

In the method for manufacturing an optical disc according to the present invention, it becomes possible to introduce such a non-linear material as the contrast enhancement lithography (CEL) material into the manufacturing process of the optical disc. Accordingly, a high density optical disc which is remarkably improved in recording density can be manufactured with high production efficiency.

In the accompanying drawings:

FIG. 1 is a flow chart sequentially showing a manufacturing process according to one embodiment of the present invention;

FIG. 2 is a graphic representation showing a distribution of light intensity within the laser beam spot to be radiated to the resist film at a focal point within the resist film;

FIG. 3 is a model diagram showing a variation of non-linear transmission coefficient in a relationship between intensity of an incident light (exposure value) and that of a transmitted light; and

FIG. 4 is a diagram schematically showing a process sequence of a conventional method for manufacturing an optical disc.

A preferred embodiment of the present invention will be described below with reference to the accompanying drawings.

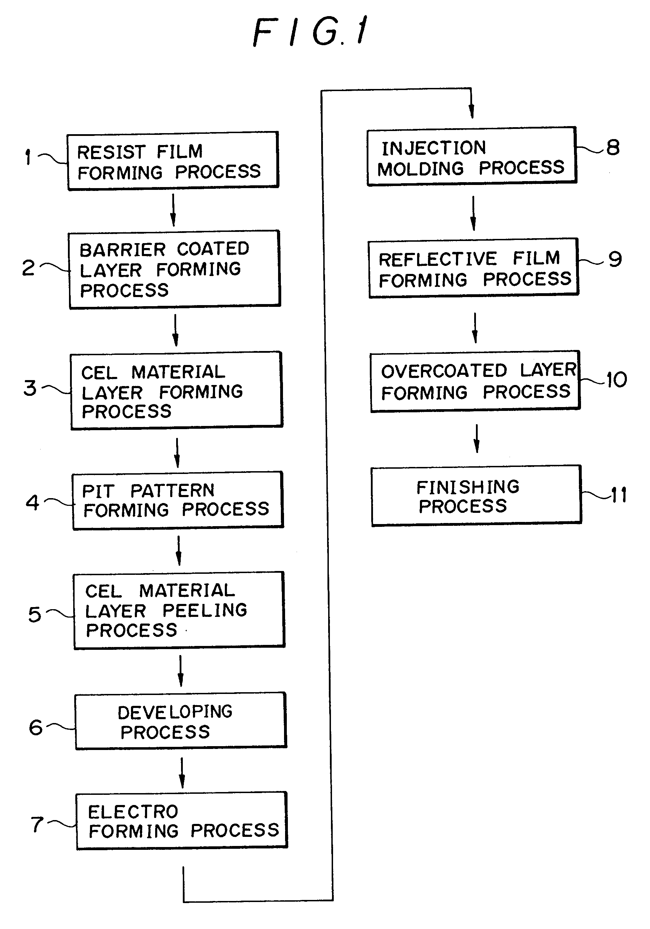

FIG. 1 is a flow chart sequentially showing a manufacturing process according to this embodiment. As shown in FIG. 1, the manufacturing method comprises: a resist film forming process 1 for forming a resist film onto a glass substrate; a barrier coat layer forming process 2 for forming a barrier coat layer onto the resist film; a CEL material layer forming process 3 for forming a contrast enhancement lithography (CEL) material layer onto the barrier coat layer; a pit pattern forming process 4 for forming a pit pattern by effecting an exposing treatment with the resist film; a CEL material layer peeling process 5 for peeling off the CEL material layer from the barrier coat layer; a developing process 6 for developing the resist film being exposed to form a resist master board; an electroforming process 7 for plating the resist master board being developed to form a stamper; an injection molding process 8 for effecting the injection molding by utilizing the stamper to form a disc; a reflection film forming process 9 for forming the reflection film onto the disc; an overcoat layer forming process 10 for forming the overcoat layer onto the reflection film; and a finishing process 11.

The glass substrate to be used for the resist film forming process 1 is the same as that used in the manufacturing process for the master board of the optical disc. A surface of the glass substrate has been well polished or finely finished.

A photoresist is coated onto the glass substrate to form a resist film. In this regard, the resist film may be coated by means of coating machine such as a spinner. Further, a thickness of the resist layer may be equal to a depth of the signal pit to be formed on the optical disc. Concretely, the thickness of the resist layer may preferably be set to about 0.1 $\mu$m. After effecting a soft baking treatment to thus formed resist layer under the conditions of a temperature of 85°C for 30 minutes, the resist film is transfered to the subsequent barrier coated layer forming process 2.

In the barrier coated layer forming process 2, a barrier coated layer is formed on the resist film. The barrier coated layer is interposed between the resist film and the contrast enhancement lithography (CEL) material layer, and has a function or operation of preventing the photoresist material constituting the resist film and the contrast enhancement lithography (CEL) material from being mixed to each other.

Preferred examples of the material for forming the barrier coated layer having such a function or operation may include polyvinyl alcohol (PVA) and polyvinyl pyrrolidone (PVP) .

The thickness of the barrier coated layer may generally be set to a range of about 300 to 500 Å. After effecting the soft-baking treatment to thus formed barrier coated layer, the barrier coated layer is transferred to the contrast enhancement lithography (CEL) material layer forming process 3.

The contrast enhancement lithography (CEL) material layer is formed of CEL material, and has a non-linear optical property to non-linearly change an intensity of a transmitted light with respect to that of an incident light. Due to the non -linear optical property, it becomes possible to reduce the size of the signal pit to be formed in the resist film during the resist pattern forming process, thus enabling to increase the recording density of the optical disc.

As a contrast enhancement lithography (CEL) material, a mixture of light decoloring compound and binder component may be used. Preferred examples of the contrast enhancement lithography (CEL) may include arylnitron type compounds such as $\alpha$-(4-diethylaminophenyl)-N-phenylnitron, $\alpha$-(4-diethylaminophenyl)-N-(4-chrorophenyl)nitron, $\alpha$-(4-diethylaminophenyl)-N-(3,4-dichloropheyl)nitron, $\alpha$-(4-diethylaminophenyl)-N-(4-acetylphenyl)nitron, $\alpha$-(4-diethylaminophenyl)-N-(4-ethoxycarbonylphenyl)nitron, $\alpha$-(9-eurolydinyl)-N-phenylnitron, $\alpha$-(9-eurolydinyl)-N-(4-chlorophenyl)nitron, $\alpha$-(4-diethylaminophenyl)-N-(4-cyanophenyl)nitron, and $\alpha$-(4-methoxyphenyl)-N-(4-cyanophenyl)nitron.

Further, preferred examples of the binder component to be contained into the CEL material together with the light decoloring compound may include vinyl acetate polymer or partial oxidation thereof, styrene copolymer or copolymer of styrene delivative, acrylic acid or methacrylic acid ester polymer, acetal resin, polyvinyl pyrrolidone, polychloroprene, polyethylene oxide, or the like.

Each of such contrast enhancement lithography (CEL) materials may easily be prepared in an ordinary way as commercially avaiable products. Specific examples thereof may include those sold under the trade names of "CEM-365", "CEM-365WS", "CEM-365WSF", "CEM-420", "CEM-420WS" and "CEM-420WSF" that are manufactured by Micro-Si Co., Ltd..

A thickness of the contrast enhancement lithography (CEL) material layer may preferably be set to a range of 800 to 2500 Å.

Thereafter, in the pit pattern forming process, a pit pattern is formed by effecting the exposing treatment onto thus formed CEL material layer.

The exposing treatment to be used in the pit pattern forming process 4 differs from a reduction projective exposing method, and is effected by laser direct drawing method wherein the laser light beam is directly radiated onto the CEL material layer to form the signal pit patterns. The laser light beam directly radiated onto the CEL material layer transmits through the CEL material layer and the barrier coated layer, then reaches to the resist film to form signal pit patterns in the resist film. At this time, a contrast of the laser light beam reaching to the resist film through the CEL material layer is enhanced or amplified by the CEL material layer, so that the signal pit pattern having a particularly high density can be resoluted in comparison with a case where the laser light beam directly reaches to the resist film without transmitting through the CEL material layer.

In the CEL material layer peeling process 5, the CEL material layer onto which the exposing treatment has been effected in the pit pattern forming process 4 is peeled. The peeling operation of the CEL material layer can easily be performed, for example, by washing the CEL material layer with pure water and removing the CEL material therefrom.

Subsequential processes following after the CEL material layer peeling process 5 are substantially the same as those of conventional manufacturing method of the optical disc.

Namely, the following processes are performed respectively in sequential order, the processes comprising: a developing process 6 for developing the resist film with the alkaline developing solution; an electroforming process 7 for plating onto the resist master board, from which the CEL material layer has been peeled, to form a stamper; an injection molding process 8 for effecting injection molding by utilizing thus formed master board (stamper) to form a disc; a reflective film forming process 9 for forming a reflective film onto the disc; an overcoated layer forming process for forming an overcoated layer onto the disc; and a finishing process such as for bonding two pieces of the discs each having the overcoated layer, or for applicating a label onto the disc as desired.

The optical disc manufacturing in accordance with aforementioned processes is remarkably improved in recording density in comparison with the optical disc manufactured in accordance with the conventional processes.

Next, the manufacturing method of this optical disc according to the present invention will now be explained with reference to the following experimental samples.

Experimental Sample 1

A positive-type resist (trade name: "ZIR9000P3" mfd. by Nippon Zeon K.K.) was coated in an ordinary method onto the glass substrate to form a resist film having a thickness of about 1000 Å. Then, the resist film together with the glass substrate was effected with soft-baking treatment in a clean oven at a temperature of 85°C for 30 minutes.

Thereafter, a barrier coating agent (trade name: "CEM BC5" mfd. by Micro Si-Co., Ltd.) was coated onto the resist film to form an overcoated layer having a thickness of about 500 Å. Then, the overcoated layer was effected with soft baking treatment at a temperature of 85°C for 10 minutes. In the next step, a contrast enhancement lithography (CEL) material (trade name: "CEM365WS" mfd. by Micro-Si Co., Ltd.) was coated onto the barrier coated layer to form a precursor having a contrast enhancement lithography (CEL) material layer having a thickness of about 2000 Å. Subsequently, a laser light beam corresponding to information signals was exposed onto the CEL material layer which had not been effected with the baking treatment. The exposing operation for the signals was effected in accordance with the following format while the intensity of the exposing light was changed.

Format of the Recording Signal

| Recording Area | Pit Length ($\mu$m) | Track Pitch ($\mu$m) |
|---|---|---|
| 1 | 0.20 | 0.4 |
| 2 | 0.175 | 0.4 |
| 3 | 0.15 | 0.4 |

By the way, the wave length of the exposing light to be used in the exposing device was set to 351 nm, and the numerical aperture NA of the optical system was 0.9.

Thereafter, the CEL material layer was removed from the precursor by being washed with pure water for 30 seconds. Then, the precursor was effected with developing treatment for 60 seconds by using a developing solution prepared by diluting an inorganic type developing solution into 2.5 times thinner. After the completion of the developing treatment, the precursor was effected with post baking treatment for the purpose of drying.

After the post baking treatment, a recorded master plate for an optical disc was prepared in accordance with the ordinary conventional manufacturing method.

Thus formed recorded master plate was then observed by means of a scanning electron microscope (SEM) ["S-4000" mfd. by Hitachi Seisakusho K.K.]. As the result, it was confirmed that the signal pit having a pit length of up to 0.175 $\mu$m and a track pitch of up to 0.4 $\mu$m was clearly resoluted, thus corresponding to a recording density of about 13 times higher than that of the laser disc in current use.

Experimental Sample 2

A recorded master plate of Experimental Sample 2 was prepared in the same manner as described in Experimental Sample 1 except that a positive type photoresist (experimental model: "ZIR119-1" mfd. by Nippon Zeon K.K.) was used in place of the resist (experimental model: "ZIR9000P3" mfd. by Nippon Zeon K.K.) and a CEL material (experimental model: "NN-104-1" mfd. by Shinetsu Kagaku Kogyo K.K.) was used in place of the CEL material (trade name: "CEM365WS" mfd. by Micro-Si Co., Ltd.).

Thus formed recorded master plate was then observed by means of the scanning electron microscope (SEM) ["S-4000" mfd. by Hitachi Seisakusho K.K.]. As the result, it was confirmed that the signal pit having a pit length of up to 0.15 $\mu$m and a track pitch of up to 0.4 $\mu$m was clearly resoluted, thus corresponding to a recording density of about 15 times higher than that of the laser disc in current use.

According to the method for manufacturing an optical disc of the present invention, it becomes possible to clearly resolute the signal pit pattern having a high recording density by introducing the contrast enhancement lithography (CEL) material into the manufacturing process of the optical disc. Accordingly, the optical disc which is remarkably improved in recording density can be manufactured with high production efficiency even in a case where the conventional exposing device and photoresist are used in the process.

**Claims**

1. A method for manufacturing an optical disc comprising:

   a resist film forming process for forming a resist film onto a glass substrate;

   a barrier coated layer forming process for forming a barrier coated layer onto the resist film;

   a CEL material layer forming process for forming a contrast enhancement lithography (CEL) material layer onto the barrier coated layer;

   a pit pattern forming process for forming a pit pattern by effecting an exposing treatment with the resist film;

   a CEL material layer peeling process for peeling off the CEL material layer from the barrier coated layer;

   a developing process for developing the resist film being exposed to form a resist master board;

   an electroforming process for plating the resist master board to form a stamper;

   an injection molding process for effecting the injection molding by utilizing the stamper to form a disc;

   a reflection film forming process for forming the reflection film onto the disc; and

   an overcoated layer forming process for forming the overcoated layer onto the reflection film.

2. A method for manufacturing an optical disc according to claim 1, wherein the barrier coated layer forming process for forming the barrier coated layer onto the resist film and the CEL material layer forming process for forming the contrast enhancement lithography (CEL) material layer onto the barrier coated layer are interposed between the resist film forming process and the pit pattern forming process.

3. A method for manufacturing an optical disc according to claim 1, wherein the CEL material layer peeling process for peeling the contrast enhancement lithography (CEL) material layer is interposed between the pit pattern forming process and the developing process.

4. A method for manufacturing an optical disc according to claim 1, further comprising a finishing process for applicating a label onto the disc.

5. A method for manufacturing an optical disc according to claim 1, wherein the barrier coated layer is composed of at least one of polyvinyl alcohol (PVA) and polyvinyl pyrrolidone (PVP) .

6. A method for manufacturing an optical disc according to claim 1, wherein a thickness of the barrier coated layer is set to a range of 300 to 500 Å.

7. A method for manufacturing an optical disc according to claim 1, wherein the CEL material layer is composed of a mixture consisting of a light decoloring compound and a binder component.

8. A method for manufacturing an optical disc according to claim 1, wherein a thickness of the CEL material layer is set to a range of 800 to 2500 Å.

# FIG. 1

1 — RESIST FILM
FORMING PROCESS

↓

2 — BARRIER COATED
LAYER FORMING
PROCESS

↓

3 — CEL MATERIAL
LAYER FORMING
PROCESS

↓

4 — PIT PATTERN
FORMING PROCESS

↓

5 — CEL MATERIAL
LAYER PEELING
PROCESS

↓

6 — DEVELOPING
PROCESS

↓

7 — ELECTRO
FORMING PROCESS

INJECTION
MOLDING PROCESS — 8

↓

REFLECTIVE FILM
FORMING PROCESS — 9

↓

OVERCOATED LAYER
FORMING PROCESS — 10

↓

FINISHING
PROCESS — 11

# F I G. 2

# F I G. 3

VARIATION OF NON-LINEAR
TRANSMISSION COEFFICIENT

# F I G.4

## PRIOR ART

Step A — 100

Step B — 101 / 100

L

Step C — 101 / 100 / P / 101

Step D — 101 / 100 / 101

Step E — 102 / 100 / 101

Step F — 103 / 100 / 101

Step G — 104

Step H — 104 / 105

Step I — 106 / 105

Step J — 107 / 106 / 105

European Patent Office

**EUROPEAN SEARCH REPORT**

Application Number

EP    92 30 9262

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DATABASE WPIL Section EI, Week 8531, Derwent Publications Ltd., London, GB; Class T03, AN 85-186853 & JP-A-60 115 035 (TOSHIBA K K) 21 June 1985 * abstract * | 1-3,5-7 | G11B7/26 |
| Y | EP-A-0 400 780 (DIGITAL EQUIP CORP) * the whole document * | 1-3,5-7 | |
| A | EP-A-0 129 019 (DISCOVISION ASSOCIATES) * abstract * | 1 | |

TECHNICAL FIELDS SEARCHED (Int. Cl.5)

G11B
B29D

The present search report has been drawn up for all claims

| Place of search | Date of completion of the search | Examiner |
|---|---|---|
| THE HAGUE | 17 FEBRUARY 1993 | ANNIBAL P. |

EPO FORM 1503 03.82 (P0401)